# EUROPÄISCHE PATENTANMELDUNG

(11) **EP 3 293 946 A1**
(43) Veröffentlichungstag der Anmeldung: **14.03.2018**
(21) Anmeldenummer: 17190724.9
(22) Anmeldetag: 12.09.2017
(51) Int. Cl.: H04L 29/08, H04L 12/28

(54) **HAUSHALTSVORRICHTUNG, HEIZUNGSREGELVORRICHTUNG, VERNETZTES HAUSHALTSVORRICHTUNGS- UND BENUTZERVORRICHTUNGS-SYSTEM SOWIE VERFAHREN DAFÜR UND COMPUTERPROGRAMMPRODUKT**

(30) Priorität: 12.09.2016 DE 102016117102; 13.09.2016 LU 93207
(71) Anmelder: ecozy GmbH, 81249 München (DE)
(72) Erfinder: Kholodov, Andre, 81249 München (DE)
(74) Vertreter: Klemm, Rolf

(57) **Zusammenfassung**

Es wird eine Haushaltsvorrichtung, insbesondere eine Heizungsregelvorrichtung, als Client-Vorrichtung (30) beschrieben, die ausgebildet ist: mit einer elektrischen Energiequelle (33), einer Client-Steuerung (31), einer bidirektionalen Kommunikationsschnittstelle (32) zur Kommunikation mit einer Benutzervorrichtung (3), zumindest einem Client-Aktor (35), zumindest einem Client-Sensor (36) und verbaut in einem Client-Gehäuse (34), wobei die Client-Vorrichtung (30) mindestens eine Umsetzungsvorrichtung (50) aufweist, um unidirektionale Kommunikationssignale (47) von einem Signal-Aktor (43) von einer nicht-vernetzten Vorrichtung (40) zu detektieren und die Client-Steuerung (31) als Teil der Umsetzungsvorrichtung (50) ausgebildet ist, um die unidirektionale Kommunikationssignale (47) auszuwerten und die bidirektionale Kommunikationsschnittstelle (32) zur bidirektionalen Kommunikation mit der Benutzervorrichtung (3) anzusteuern, wobei der Client-Aktor (45) die Haushaltsvorrichtung zum Betrieb einer physischen Leistung elektrisch ansteuert.

## Beschreibung

### Stand der Technik

Die Erfindung bezieht sich auf eine Haushaltsvorrichtung, eine Heizungsregelvorrichtung, ein vernetztes Haushaltsvorrichtungs- und Benutzervorrichtungs-System sowie ein Verfahren eines vernetzten Haushalts-, insbesondere Heizungsregelvorrichtung-Systems und ein Computerprogrammprodukt.

Es sind Smartphones und Smarttabletts als Benutzervorrichtungen bekannt, die bidirektionale Kommunikationsschnittstellen zu einem SIM-Netzwerk, lokalen WLAN-Netzwerken und/oder Mikro-Netzwerken, wie beispielsweise die Bluetooth oder near field communication (NFC) Technologie, aufweisen.

Es sind Temperaturregelungssysteme in Kombination von Heizungsregelungssystemen für Wohnungen, Häuser und Gebäude mit einem Steuergerät und einer oder mehreren per Funk ansteuerbaren Regeleinheiten bekannt. Diese Regeleinheiten werden beispielsweise über ein lokales kabelloses Funknetz (WLAN, DECT) angesteuert. Das Steuergerät könnte auch über externe Benutzervorrichtungen, wie beispielsweise Smartphones, angesteuert werden. Hierzu ist das Steuergerät beispielsweise über einen lokalen Router mit dem Internet verknüpft und die Benutzervorrichtung ist ebenfalls mit dem Internet verbindbar. Die DE 10 2012 102 615 A1 beschreibt ein Heizkörperthermostat mit möglicher Funkschnittstelle.

Diese Regeleinheiten, die auch andere haushaltsnahe und gebäudenahe elektrische Vorrichtungen sein könnten, wie Lüftungs- und Klimatisierungsvorrichtungen, Kaffeemaschinen, Rollladensteuerungen oder Beleuchtungssteuerungen, werden hierin und im Folgenden als Client-Vorrichtungen bezeichnet. Solche intelligente haushaltsnahe Steuerungen werden als Smart-Home-Automations-Systeme bezeichnet.

Es wird hiermit klargestellt, dass unter Client-Vorrichtungen nicht nur solche in Haushalten und Gebäuden allgemein zu verstehen sind, sondern alle Vorrichtungen mit ähnlichen technischen Funktionen, die in beliebigen technischen Anwendungen einsetzbar sind. Solche Client-Vorrichtungen weisen in der Regel eine elektrische Energiequelle, eine Client-Steuerung, eine bidirektionale Kommunikationsschnittstelle zur Kommunikation mit einer Benutzervorrichtung sowie mindestens eine Client-Aktor, mindestens einen Client-Sensor auf und sind in einem Client-Gehäuse verbaut.

Es sind Rauchmelder für Schlafräume, Aufenthaltsräume und Arbeitsräume bekannt und zunehmend gesetzlich vorgeschrieben. Es gibt mindestens zwei Arten von Rauchmeldern. Per Funk vernetzte Rauchmelder sind mit einer zentralen Überwachungseinheit verbunden und können Alarmsignale über eine Smart-Home-Automationsschnittstelle weiterleiten. Nicht per Funk vernetzte Rauchmelder haben den Vorteil, dass diese eine längere Batterielaufzeit haben, ressourcenschonender und somit kosteneffizienter sind. Es gibt auch eine Untergruppe hiervon, bei denen die Funktionstüchtigkeit der Rauchmelder per Funk überprüfbar ist, wobei diese autark und autonom installiert sind.

Diese Rauchmelder stehen lediglich als Beispiel für nicht-vernetzte elektrische Vorrichtungen und können auch beliebige andere technische Vorrichtungen sein, die ein unidirektionales, nicht-vernetztes Signal ausgeben.

Die US 2004/151282 A1 beschreibt eine Sicherheitsdektektionssystem.

### Zu lösendes Problem

Ziel ist es eine oben beschriebene Haushaltsvorrichtung, eine Heizungregelvorrichtung, ein vorhandenes Haushaltvorrichtungs, insbesondere Heizungsregelvorrichtung und Benutzervorrichtungs-System sowie ein Verfahren dafür und ein Computerprogrammprodukt zum Betreiben dafür weiterzubilden, um nicht-vernetzte, herkömmliche Vorrichtungen in ein vorhandenes Netz mit einzubinden und dabei Ressourcen an allen technischen Komponenten zu schonen.

### Lösung, Vorteile und Ausgestaltungen

Es wird eine Haushaltsvorrichtung als Client-Vorrichtung geschaffen, die ausgebildet ist: mit einer elektrischen Energiequelle, einer Client-Steuerung, einer bidirektionalen Kommunikationsschnittstelle zur Kommunikation mit einer Benutzervorrichtung, zumindest einem Client-Aktor, zumindest einem Client-Sensor und verbaut in einem Client-Gehäuse, wobei die Client-Vorrichtung mindestens eine Umsetzungsvorrichtung aufweist, um unidirektionale Kommunikationssignale von einem Signal-Aktor von einer nicht-vernetzten Vorrichtung zu detektieren und die Client-Steuerung als Teil der Umsetzungsvorrichtung ausgebildet ist, um die unidirektionale Kommunikationssignale auszuwerten und die bidirektionale Kommunikationsschnittstelle zur bidirektionalen Kommunikation mit der Benutzervorrichtung anzusteuern, wobei der Client-Aktor eine Haushaltsvorrichtung zum Betrieb und Erzeugung einer physischen Leistung elektrisch ansteuert.

Die physische Leistung kann zum Beispiel eine Wärme- oder Kühlleistung von einer Raumheizung, eine Kühlleistung von einer Klimaanlage oder Kühlschrank oder auch eine Kaffeemaschine zur Erzeugung von warmen Kaffee sein, d.h. Wasser zu erhitzen und durch einen Kanal zu führen oder zu pressen. Hierfür sind Heizdrähte und mindestens ein Elektromotor vorgesehen.

Vorteile sind somit, dass die kostengünstige, herkömmliche, nicht-vernetzte Vorrichtung weder ausgetauscht noch verändert werden muss und diese in neue vernetzte Smart-Automation-Systeme eingebunden werden kann, wobei die neue Client-Vorrichtungje nach Anwendungsfall mit einergeringen technischen Erweiterung als Umsetzungsvorrichtung ergänzt wird. Der Zustand der nicht-vernetzten Vorrichtung kann somit mittels einer modernen Benutzervorrichtung überprüft werden oder dessen unidirektionale Signale können an die Benutzervorrichtung übermittelt werden. Es können auch weiterhin kostengünstige, herkömmliche, nicht-vernetzte Vorrichtungen installiert werden, die mit den neuen Client-Vorrichtungen wie hierin beschrieben verknüpft werden.

Gemäß einer die Haushaltsvorrichtung weiterbildenden Ausführungsform, umfasst die Umsetzungsvorrichtung einen Umsetzungssensor und ein Steuermodul, das in der Client-Steuerung ausführbar ist. Der Umsetzungssensor umfasst natürlich auch eine entsprechende Elektronik. Das Steuermodul kann Teil der Client-Steuerung sein und die vorhandenen Ressourcen nutzen. Somit ist der Bauteilaufwand gering zur Umsetzung eine Umsetzungsvorrichtung von einem unidirektionalen Signal zu einem bidirektionalen Kommunikationssignal zu einer Benutzervorrichtung.
Die Haushaltsvorrichtung ist als Client-Vorrichtung effizient in einer Gebäudeautomation einsetzbar, als zusätzliches mobiles Haushaltsnahes Gerät oder festinstalliertes Kühl- oder Wärmeaggregat beispielsweise.

Bevorzugt umfasst eine Heizungsregelvorrichtung die oben beschriebene Haushaltsvorrichtung und der Client-Aktor ist als Heizungsregler eines Heizungskörpers in einem zu beheizenden Raum ausgebildet. Es versteht sich, dass unter Haushaltsvorrichtung auch Vorrichtungen in Gebäuden mit Partei- und Kundenverkehr, Bürogebäuden oder Industriegebäuden zu verstehen sind.

Es wird ein vernetztes Haushaltsvorrichtungs-, insbesondere Heizungsregelvorrichtungs-, und Benutzervorrichtungs-System zur Einbindungvon mindestens einer nicht-vernetzten elektrischen Vorrichtung geschaffen. Die nicht-vernetzte Vorrichtung ist mit einem Signal-Aktor zur unidirektionalen Kommunikation ausgebildet. Das System umfasst mindestens eine Client-Vorrichtung, die ausgebildet ist mit einer elektrischen Energiequelle, einer Client-Steuerung, einer bidirektionalen Kommunikationsschnittstelle zur Kommunikation mit der Benutzervorrichtung, zumindest einem Client-Aktor, zumindest einem Client-Sensor und verbaut in einem Client-Gehäuse. Die Client-Vorrichtung weist mindestens eine Umsetzungsvorrichtung auf, um unidirektionale Kommunikationssignale von dem Signal-Aktor von der nicht-vernetzten Vorrichtung zu detektieren und die Client-Steuerung ist als Teil der Umsetzungsvorrichtung ausgebildet, um die unidirektionale Kommunikationssignale auszuwerten und die bidirektionale Kommunikationsschnittstelle zur bidirektionalen Kommunikation mit der Benutzervorrichtung anzusteuern. Das System weist eine Applikationsvorrichtung auf, die in der, insbesondere als Smartphone ausgebildeten, externen Benutzervorrichtung ausgebildet ist, um von der nicht-vernetzten elektrischen Vorrichtung abgegebene unidirektionalen Signale in Form von Daten als Beschreibung des Zustands der nicht-vernetzten elektrischen Vorrichtung zu empfangen.

Somit wurde ein effizientes System geschaffen, mit einem geringen Bauteilaufwand herkömmliche, nicht-vernetzte elektrische Vorrichtungen in ein vernetztes neues System mit einzubeziehen. Dabei werden die herkömmlichen, nicht-vernetzten elektronischen Vorrichtungen nicht verändert. Die lange Lebensdauer der herkömmlichen, nicht-vernetzten elektrischen Vorrichtungen wird beibehalten.

Gemäß einer das System weiterbildenden Ausführungsform ist zwischen der Client-Vorrichtung und der Benutzervorrichtung eine zentrale Rechnereinheit im bidirektionalen Kommunikationsweg dazwischengeschaltet, wobei die zentrale Rechnereinheit mit einer zentralen Rechnersteuerung, einem zentralen Steuermodul innerhalb der Rechnersteuerung, einer Kommunikationsschnittstelle zur kabellosen, insbesondere als WLAN ausgebildeten und/oder LAN kabelgeführten Netz-, Kommunikation mit mindestens einer lokal vernetzten Client-Vorrichtung und mindestens eine Kommunikationsschnittstelle für eine Kommunikation mit der mindestens einen externen Benutzervorrichtung über mindestens ein externes Kommunikationsnetz ausgebildet ist. Mit der zentralen Rechnereinheit können somit viele Daten von verschiedenen lokal vernetzten Client-Vorrichtungen gesammelt über eine Netzübergangseinheit in andere Netze wie beispielsweise das Internet oder ein Festnetz oder ein SIM-Mobilfunknetz übertragen werden.

Somit können die als Client ausgebildeten Haushaltsvorrichtungen/Heizungsregel-Vorrichtungen effizient gebaut sein und lediglich eine Umsetzungsvorrichtung aufweisen, die die unidirektionalen Kommunikation Signale von den nicht-vernetzten Vorrichtungen in bidirektionale, digitale Kommunikationsdatenpakete wandelt. Die digitalen bidirektionalen Kommunikation Datenpakete sind von der zentralen Rechnereinheit weiter verarbeitbar, sodass moderne Benutzervorrichtungen eingebunden werden können.

Es wird auch ein Verfahren eines vernetzten -Haushaltsvorrichtungs-, insbesondere Heizungsregelvorrichtungs- und Benutzervorrichtungs-Systems zur Einbindung von mindestens einer nicht-vernetzten elektrischen Vorrichtung mit einem Signal-Aktor zur unidirektionalen Kommunikation mit folgenden Schritten geschaffen: Überwachen eines unidirektionalen Kommunikationssignals, das von dem Signal-Aktor von der nicht-vernetzten elektrischen Vorrichtung bei Erreichen eines definierten Schwellwerts erzeugt wird, mittels einer Umsetzungsvorrichtung, Auswerten der Daten von unidirektionalen Kommunkationssignalen durch Prüfen auf ein definiertes Datenereignis mittels der Umsetzungsvorrichtung, Erzeugung einer Daten-Information von einer Client-Vorrichtung mittels einer Client-Steuerung zur Übermittlung dieser über bidirektionale Kommunikationsschnittstellen bei dem definierten Datenereignis und Übermittlung der Daten-Information von der Clientsteuerung bidirektional an mindestens eine externe Benutzervorrichtung.

Idealerweise gibt die nicht-vernetzte elektrische Vorrichtung in der Regel keine unidirektionalen Signale ab. Nur in bestimmten Ausnahmefällen werden unidirektionale Signale erzeugt. Die Überwachung der unidirektionalen Signale übernimmt die Umsetzungsvorrichtung in der Client-Vorrichtung. Die Umsetzungsvorrichtung übernimmt auch das Auswerten der Daten von den unidirektionalen Kommunikationssignalen. Mittels des Verfahrens werden somit einfach nicht-vernetzte Vorrichtungen in ein bereits im Wesentlichen vorhandenes vernetztes System mit vorhandenen Verfahrensabläufen eingebunden.

Gemäß einem weiterbildenden Verfahren wird ein Alarmsignal von einem Lautsprecher als Signal-Aktor von einem, als nicht-vernetzte elektrische Vorrichtung ausgebildeten, Rauchmelder bei Erreichen eines definierten Schwellwerts abgegeben und das Auftreten von diesem Alarmsignal wird mittels eines Mikrofons, das als Umsetzer-Sensor von der Umsetzungsvorrichtung in der Client-Vorrichtung ausgebildet ist, und einem Steuermodul, das in der Client-Steuerung als weiteres Teil der Umsetzungsvorrichtung ausgebildet ist, überwacht wird. Somit können herkömmliche nicht-vernetzte Rauchmelder, die eine lange Batterielebensdauer aufweisen, in vernetzte Smart-Home-Systeme eingebunden werden.

Um das Verfahren möglichst einfach nachzurüsten bzw. in neue oder vorhandene Gebäude und Räume einzuführen, ist die Umsetzungsvorrichtung in einer Heizungsregelvorrichtung als vernetzte Client-Vorrichtung ausgebildet und von der Client-Steuerung als Steuermodul die erfassten unidirektionalen Kommunikationssignale ausgewertet werden und eine zentrale Rechnersteuerung einer zentralen Rechnereinheit per Kommunikationsdatenprotokoll von der Client-Steuerung angesteuert wird.

Das Verfahren ist insbesondere dann relevant, wenn der Besitzer oder Eigentümer der nicht-vernetzten Vorrichtung sich nicht in dessen unmittelbarer Nähe aufhält, sondern räumlich sehr weit entfernt ist. Um kostengünstig und einfach Besitzer und gegebenenfalls Eigentümer von nicht-vernetzten Vorrichtungen über besondere Zustände von diesen Vorrichtungen zu informieren, ist das Verfahren derart weitergebildet, dass die von der Client-Steuerung an die zentrale Rechnersteuerung übermittelten Daten, über mindestens ein definiertes externes Kommunikationsnetz, insbesondere über ein Mobilfunknetz und/oder ein mittels Kabelleitung oder drahtlos installiertes Netz und/oder eines Internet-basierten Netzes, an die externe Benutzervorrichtung übermittelt werden. Somit kann der Besitzer oder Eigentümer über eine externe Benutzervorrichtung, zum Beispiel als Smartphone ausgebildet, im Ausnahmefall den erfassten Zustand von der nicht-vernetzten Vorrichtung erfahren.

Es wird auch Computerprogrammproduktzum Betreiben eines vernetzten Haushaltsvorrichtungs-, insbesondere Heizungsregelvorrichtungs- und Benutzervorrichtungs-Systems zur Einbindung von mindestens einer nicht-vernetzten elektrischen Vorrichtung mit einem Signal-Aktor zur unidirektionalen Kommunikation geschaffen, wobei das Computerprogrammprodukt mindestens ein computerlesbares Speichermedium mit jeweils einem darin enthaltenen Programmcode umfasst, wobei jeder Programmcode durch einen Prozessor ausführbar ist, um ein Verfahren durchzuführen, mit folgenden Schritten: Überwachen eines unidirektionalen Kommunikationssignals, das von dem Signal-Aktor von der nicht-vernetzten elektrischen Vorrichtung bei Erreichen eines definierten Schwellwerts erzeugt wird, mittels einer Umsetzungsvorrichtung, Auswerten der Daten durch Prüfen auf ein definiertes Datenereignis mittels der Umsetzungsvorrichtung, Erzeugung einer Daten-Information von einer Client-Vorrichtung mittels einer Client-Steuerung zur Übermittlung dieser über bidirektionale Kommunikationsschnittstellen bei dem definierten Datenereignis und Übermittlung der Daten-Information von der Client-Steuerung bidirektional an mindestens eine externe Benutzervorrichtung. Das Computerprogramm hat den Vorteil das vorhandene Ressourcen kostengünstig einsetzbar sind und lediglich die Verfahrensschritte zu implementieren sind. Somit ist der Bauteilaufwand reduziert.

Es versteht sich, dass die vorstehend genannten und nachstehend noch zu erläuternden Merkmale nicht nur in der jeweils angegebenen Kombination, sondern auch in anderen Kombinationen verwendbar sind.

### Kurze Beschreibung der Zeichnungen

Die Erfindung wird im Folgenden anhand mindestens eines Ausführungsbeispiels unter Bezugnahme auf Zeichnungen näher erläutert. Es zeigen:
- Fig. 1: eine schematische Ansicht in abstrahierter Form einer als Client ausgebildeten Heizungsregelvorrichtung und eines vernetzten Heizungsregel- und Benutzervorrichtungs-Systems,
- Fig. 2: ein Flussdiagramm eines Verfahrensablauf eines vernetzten Heizungsregel- und Benutzervorrichtungs-Systems nach Fig. 1,

### Detaillierte Beschreibungen der Zeichnungen

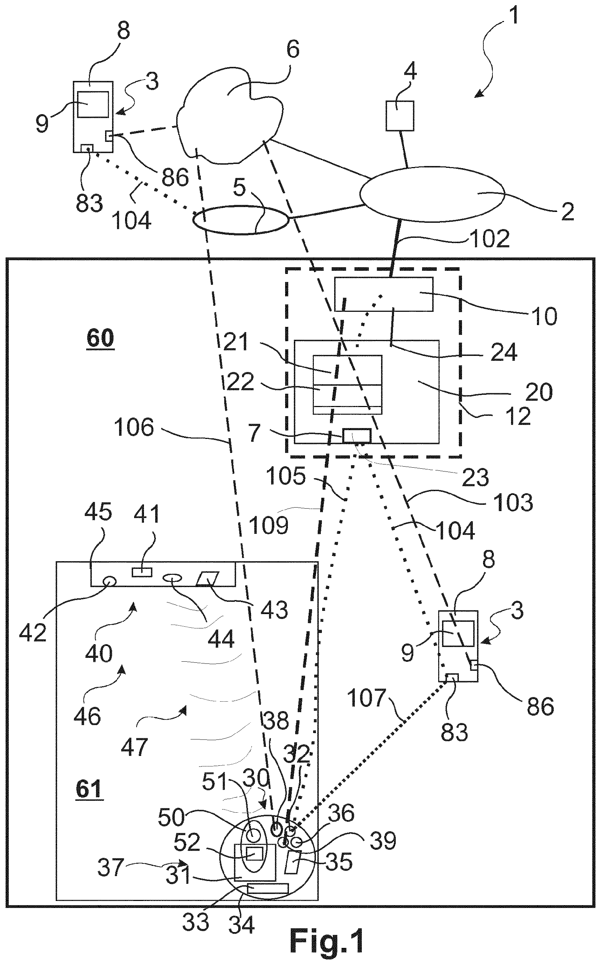

Die Fig. 1 zeigt ein vernetztes Heizungsregelvorrichtungs- und Benutzervorrichtungs-System 1 zur Einbindung von mindestens einer nicht-vernetzten elektrischen Vorrichtung 40.

Die nicht-vernetzte elektrische Vorrichtung 40 ist bevorzugt ein standardisierter Rauchmelder 46 mit einer möglichst langen Batterielebensdauer als Energiequelle 44. Die elektrische nicht-vernetzte Vorrichtung 40 umfasst ein Gehäuse 45, das bevorzugt an einer Decke von einem Raum 61 in einem Gebäude oder Haus 60. Exemplarisch ist nur ein Raum 61 in der Fig. 1 gezeigt, es versteht sich, dass eine Vielzahl von Räumen 61 in dem Haus oder Gebäude 60 vorhanden sind.

Der Rauchmelder 46 hat eine Steuerung 41 sowie einen Sensor 42 und einen als Signal-Aktor 43 ausgebildeten Summer. Der Summer gibt Alarmtöne in einer bestimmten Frequenz nach einem bestimmten Muster als Schallwellen 47 ab, sobald von dem Sensor 42 eine Gefahr aufgrund der Rauchentwicklung detektiert wird. Hierzu wertet die Steuerung 41 die Sensorwerte vom Sensor 42 aus und prüft, ob ein definierter Schwellwert überschritten wurde. Bei Überschreitung wird der Summer, der Signal-Aktor 43, zur Ausgabe von unidirektionalen Kommunikationssignalen 47 angesteuert.

In jedem Raum 61 oder in einem Teil der Räume 61 ist zumindest eine Client-Vorrichtung 30 angeordnet. Die Client-Vorrichtung 30 ist mit einer elektrischen Energiequelle 33, einer Client-Steuerung 31, zumindest einer bidirektionalen Kommunikationsschnittstelle 32 zur Kommunikation mit einer Benutzervorrichtung 3, zumindest einem Client-Aktor 35, zumindest einem Client-Sensor 36 ausgebildet und in einem Client-Gehäuse 34 verbaut. Hier ist als besonderes Beispiel die Client-Vorrichtung 30 als eine Heizungsregelvorrichtung 37 ausgebildet. Die Heizungsregelvorrichtung 37 ist beispielsweise ein Thermostat in Form eines Kopfes, der an einen herkömmlichen Heizkörper in einem Raum 61 montiert werden kann. Die Energiequelle 33 ist entweder eine Batterie oder ein Stromnetz. Der Client-Sensor 36 ist in diesem Anwendungsbeispiel ein Thermostatsensor. Und der Client-Aktor 35 ist ein Motor, der das Heizungsventil vom Heizkörper ansteuert. Die Client-Steuerung 31 ist also eine Heizkörpersteuerung, die eine Temperatur auf einen eingestellten Wert regelt.

Eine bidirektionale Kommunikationsschnittstelle 32 ist schafft entweder ein lokales Netz, beispielsweise als WLAN oder LAN-Netz, oder ist damit verbunden. Somit ist über eine, beispielsweise als Smartphone oder Smartrechnertablett ausgebildete, Benutzervorrichtung 3 die Client-Steuerung 31 direkt über einen Kommunikationsweg 107 einstellbar. Hierzu hat die Benutzervorrichtung 3 ebenfalls eine bidirektionale Kommunikationsschnittstelle 83, für beispielsweise ein WLAN oder Bluetooth oder ähnliches Netz, ausgebildet. Die Benutzervorrichtung 3 weist hierfür eine spezielle Applikationsvorrichtung 9 auf. Die Applikationsvorrichtung 9 ist auf die Ansteuerung und bidirektionale Kommunikation mit der Client-Steuerung 31 über ein spezielles Computerprogrammprodukt abgestimmt. Hierfür ist in der Fig. 1 ein Kommunikationsweg 107 zwischen der Kommunikationsschnittstelle 83 und der Kommunikationsschnittstelle 32 eingezeichnet.

Es könnte auch ein Kommunikationsweg 104, 105 über eine zentrale Rechnereinheit 20 zwischen der Client-Vorrichtung 30 und der Benutzervorrichtung 3 dazwischengeschaltet sein. Dies ist dann vorteilhaft, wenn das Gebäude 60 groß ist und mehrere Räume 61 aufweist und die Benutzervorrichtung 3 sich in einem anderen Raum 61 befindet, als in dem Raum 61, in dem ein unidirektionales Kommunikationssignal 47 ausgelöst wird. Außerdem ist eine zentrale Rechnereinheit 20 vorteilhaft, wenn viele Client-Vorrichtungen 30 eingesetzt werden und die Kommunikation mit der Benutzervorrichtung 3 somit gebündelt werden kann.

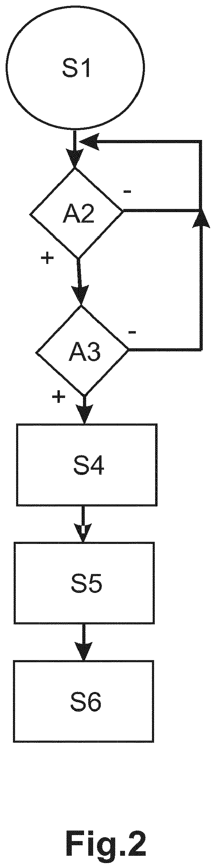

Die Client-Vorrichtung 30 weist mindestens eine Umsetzungsvorrichtung 50 auf, um unidirektionale Kommunikationssignale 47 in Form von definierten Schallwellen bei einer definierten Frequenz von dem Signal-Aktor 43 von der nicht-vernetzten Vorrichtung 40 zu detektieren. Die Umsetzungsvorrichtung 50 umfasst hierzu ein Mikrofon als Umsetzungssensor 51 und ein Steuermodul 52, das in der Client-Steuerung 31 ausführbar ist. Das Mikrofon ist an digitale Eingänge und Ausgänge zur Stromversorgung von der Client-Steuerung 31 angeschlossen. Bevorzugt ist ein elektrisch aktives Mikrofon eingesetzt. Die Client-Steuerung 31 ist also als Teil der Umsetzungsvorrichtung 50 ausgebildet, um die unidirektionale Kommunikationssignale 47 auszuwerten. Das Steuermodul 52 prüft also, wie in der Fig. 2 gezeigt ist, ob der Umsetzungssensor 51 das charakteristische Frequenzsignal detektiert.

Ist das der Fall, so steuert die Client-Steuerung 31 die bidirektionale Kommunikationsschnittstelle 32 zur bidirektionalen Kommunikation mit der Benutzervorrichtung 3 an. In der Applikationsvorrichtung 9 sind dann die Daten vom Zustand der nicht-vernetzten elektrischen Vorrichtung 40 empfangbar.

Die zentrale Rechnereinheit 20 umfasst eine zentrale Rechnersteuerung 21, ein zentrales Steuermodul 22 innerhalb der Rechnersteuerung 21, eine Kommunikationsschnittstelle 23 zur kabellosen, insbesondere als WLAN ausgebildeten und/oder LANkabelgeführten Netz-, Kommunikation mit mindestens einer lokal vernetzten Client-Vorrichtung 30 und mindestens eine Kommunikationsschnittstelle 24 für eine Kommunikation mit der mindestens einen externen Benutzervorrichtung 3, 4 über mindestens ein externes Kommunikationsnetz mit einer Netzverteilungsvorrichtung 2 ausgebildet ist. Die zentrale Rechnereinheit 20 kommuniziert mit der mindestens einen Client-Vorrichtung 30 über ein Funknetz, beispielsweise ein WLAN-Netz 105. Die Kommunikation über die bidirektionale Kommunikationsschnittstelle 23 mit der Client-Vorrichtung 30 über die bidirektionale Kommunikationsschnittstelle 32 also per Funk. Die zentrale Rechnereinheit 20 kommuniziert ebenfalls über ein Funknetz Daten 104 an die Benutzervorrichtung 3 mit einer Funk-Kommunikationsschnittstelle 83.

Zwischen der zentralen Rechnereinheit 20 und dem externen Kommunikationsnetz mit der Netzverteilungsvorrichtung 2 ist ein Router 10 dazwischengeschaltet. Die Kommunikation zwischen dem Router 10 und der zentralen Rechnereinheit 20 erfolgt über ein bekanntes LAN oder WLAN Netz. Es versteht sich, dass die zentrale Rechnereinheit 20 und der Router 10 eine einheitliche Router-Rechnervorrichtung 12 bilden können, wie dies durch gestrichelte Linien dargestellt ist. Weist die Router-Rechnervorrichtung 12 eine weitere Funknetztechnologie, wie zum Beispiel ein DECT-Funknetzwerk auf, so ist auch eine Funkverbindung 109 mit der Client-Vorrichtung 30 über eine DECT-Schnittstelle 39 möglich.

Befindet sich die Benutzervorrichtung 3 entfernt von dem Gebäude 60 ist eine Kommunikation über die Netzverteilungsvorrichtung 2 möglich. Hierzu ist zwischen dem Router 10 im Gebäude 60 und der Netzverteilungsvorrichtung 2, beispielsweise ein Kabelnetz 102, beispielsweise in DSL-Technologie, angeordnet. Die Netzverteilungsvorrichtung 2 kommuniziert je nach gewählter Vorgabe des Routers 10 entweder mit einer über ein kabelnetz erreichbaren kabelbehafteten Benutzervorrichtung oder mit einem Mobilfunknetz 6, beispielsweise mit SIM-Karten-Technologie, oder mit Internetserviceprovidern 5 und über externe Router mittels einer WLAN-Verbindung 104 mit der Benutzervorrichtung 3 und dessen Kommunikationsschnittstelle 83. Für das SIM-Karten-Mobilfunknetz 6 weist die Benutzervorrichtung 3 Mobilfunkschnittstelle 86 mit einem Kommunikations-Funkweg 103 auf. Die Benutzervorrichtung 3 kann sowohl extern als auch intern über Mobilfunk auch im Gebäude 60 erreicht werden. Gemäß einer alternativen Ausführungsform weist die Client-Vorrichtung 30 auch eine Mobilfunk-Schnittstelle 38 auf. Bevorzugt ist eine WLAN oder z.B. DECT-Schnittstelle eines lokalen Netzes.

Die Fig. 2 zeigt ein Flussdiagramm eines Verfahrensablaufs von einem vernetzten Heizungsregel- und Benutzervorrichtungs-System 1 mit folgenden Schritten ausgeführt wird.

In einem ersten Schritt S1 wird das vernetzten Heizungsregel- und Benutzervorrichtungs-System 1 mit der Client-Vorrichtung 30 und gleichzeitig die zentrale Rechnereinheit 20 bzw. die Router-Rechnervorrichtung 12 zur Einbindung von mindestens einer nicht-vernetzten elektrischen Vorrichtung 40 gestartet. Die elektrische nicht-vernetzte Vorrichtung 40 arbeitet autonom und unabhängig. Sie weist einen Signal-Aktor 43 mit Kommunikationssignalen 47 zur unidirektionalen Kommunikation auf.

Die Steuerung des Systems 1 geht in einen Abfrageschritt A2 über und stellt in einer laufenden Abfrage fest, ob die Umsetzungsvorrichtung 50 mit dem Umsetzungssensor 51 charakteristische Kommunikationssignale 47 empfängt und detektiert. Ist das nicht der Fall, so wird dieser Abfrageschritt A2 laufend wiederholt in Echtzeit. Vorzugsweise wird dieser Verfahrensschritt in einem sehr energiesparsamen elektrischen Stromkreis ausgeführt.

Wird dagegen eine positive charakteristische Frequenz des Kommunikationssignals 47 mit dem als Mikrofon ausgebildeten Umsetzungssensor 51 gemessen, so geht der Abfrageschritt A2, zu dem Abfrageschritt A3 über.

Im Abfrageschritt A3 wird geprüft, ob das Muster des Kommunikationssignals 47 einem charakteristischen, vorher festgelegten Muster entspricht, beispielsweise ob ein charakteristischer Dauerton vorliegt und nicht nur ein kurzfristiges Erreichen des charakteristischen Kommunikationssignals 47, der beispielsweise nur maximal wenige Sekunden lang anhält. Somit werden fehlerhafte Signale ausgefiltert. Im negativen Fall kehrt die Client-Steuerung 31 vor den Abfrageschritt A2 zurück.
Im positiven Fall geht die Client-Steuerung 31 vom System 1 in den Schritt S4 über. In diesem Schritt S4 erzeugt die Client-Steuerung 31 eine Dateninformation, dass das Kommunikationssignal 47 von der nicht-vernetzten Vorrichtung 40 detektiert worden ist. Hierzu wird beispielsweise die Uhrzeit und der Ort der Client-Vorrichtung 30 mitgeteilt und an die zentrale Rechnereinheit 20 gegebenenfalls als Router-Rechnervorrichtung 12 über oben beschriebene Kommunikationsnetze und bidirektionale Schnittstelle weitergeleitet.

Im Schritt S5 leitet die zentrale Rechnereinheit 20 diese Dateninformation, wie oben beschrieben entweder intern oder extern über die Netzverteilungsvorrichtung 2 und die oben beschriebenen Kommunikationsnetzwerke 5, 6 oder an die Benutzervorrichtung 4 mit Festnetzanschluss weiter.

Im Schritt S6 erhält bevorzugt die Dateninformation eine mobile Benutzervorrichtung 3 mit einer Applikationsvorrichtung 9. Somit wird ein möglicher sich extern aufhaltender Benutzer über den Zustand einer nicht-vernetzen elektrischen Vorrichtung genauestens informiert und kann entsprechend handeln. In diesem vorliegenden Beispiel mit Rauchmeldern und Detektoren für Rauchmelder können entsprechende Vorkehrungen rechtzeitig getroffen werden, um größer Schäden zu vermeiden.

Alle Figuren zeigen lediglich schematische nicht maßstabsgerechte Darstellungen. Im Übrigen wird insbesondere auf die zeichnerische Darstellungen für die Erfindung als Wesentlich verwiesen.

## Patentansprüche

1. Haushaltsvorrichtung als Client-Vorrichtung (30) ausgebildet mit einer elektrischen Energiequelle (33), einer Client-Steuerung (31), einer bidirektionalen Kommunikationsschnittstelle (32) zur Kommunikation mit einer Benutzervorrichtung (3), zumindest einem Client-Aktor (35), zumindest einem Client-Sensor (36) und verbaut in einem Client-Gehäuse (34), wobei die Client-Vorrichtung (30) mindestens eine Umsetzungsvorrichtung (50) aufweist, um unidirektionale Kommunikationssignale (47) von einem Signal-Aktor (43) von einer nicht-vernetzten Vorrichtung (40) zu detektieren und die Client-Steuerung (31) als Teil der Umsetzungsvorrichtung (50) ausgebildet ist, um die unidirektionale Kommunikationssignale (47) auszuwerten und die bidirektionale Kommunikationsschnittstelle (32) zur bidirektionalen Kommunikation mit der Benutzervorrichtung (3) anzusteuern, wobei der Client-Aktor (45) die Haushaltsvorrichtung zum Betrieb einer physischen Leistung elektrisch ansteuert.

2. Haushaltsvorrichtung nach dem vorherigen Anspruch 1, wobei die Umsetzungsvorrichtung (50) ein elektrisches Mikrofon als Umsetzungssensor (51) umfasst und ein Steuermodul (52), das in der Client-Steuerung (31) ausführbar ist.

3. Heizungsregelvorrichtung (37) mit einer Haushaltsvorrichtung nach Anspruch 1 oder 2, wobei der Client-Aktor (35) als Heizungsregler eines Heizungskörpers in einem zu beheizenden Raum ausgebildet ist, der Client-Aktor (35) ein Motor ist, der das Heizungsventil vom Heizkörper ansteuert und der Client-Sensor (36) ein Thermostatsensor ist.

4. Vernetztes Haushaltsvorrichtungs-, insbesondere Heizungsregelvorrichtungs- und Benutzervorrichtungs-System (1) zur Einbindung von mindestens einer nicht-vernetzten elektrischen Vorrichtung (40), die mit einem Signal-Aktor (43) zur unidirektionalen Kommunikation ausgebildet ist, umfassend (mindestens eine Client-Vorrichtung (30), insbesondere nach einem der vorhergehenden Ansprüche, die ausgebildet ist mit einer elektrischen Energiequelle (33), einer Client-Steuerung (31), einer bidirektionalen Kommunikationsschnittstelle (32) zur Kommunikation mit einer Benutzervorrichtung (3), zumindest einem Client-Aktor (35), zumindest einem Client-Sensor (36) und verbaut in einem Client-Gehäuse (34), wobei die Client-Vorrichtung (30) mindestens eine Umsetzungsvorrichtung (50) aufweist, um unidirektionale Kommunikationssignale (47) von dem Signal-Aktor (43) von der nicht-vernetzten Vorrichtung (40) zu detektieren und die Client-Steuerung (31) als Teil der Umsetzungsvorrichtung (50) ausgebildet ist, um die unidirektionale Kommunikationssignale (47) auszuwerten und die bidirektionale Kommunikationsschnittstelle (32) zur bidirektionalen Kommunikation mit der Benutzervorrichtung (3) anzusteuern und mit einer Applikationsvorrichtung (9), die in der, insbesondere als Smartphone ausgebildeten, externen Benutzervorrichtung (3) ausgebildet ist, um Daten vom Zustand der nicht-vernetzten elektrischen Vorrichtung (40) zu empfangen.

5. System (1) nach dem vorherigen Anspruch, wobei zwischen der Client-Vorrichtung (30) und der Benutzervorrichtung (3) eine zentrale Rechnereinheit (20) im bidirektionalen Kommunikationsweg dazwischengeschaltet ist, wobei die zentrale Rechnereinheit (20) mit einer zentralen Rechnersteuerung (21), einem zentralen Steuermodul (22) innerhalb der Rechnersteuerung (21), einer Kommunikationsschnittstelle (23) zur kabellosen, insbesondere als WLAN ausgebildeten und/oder LAN kabelgeführten Netz-, Kommunikation mit mindestens einer lokal vernetzten Client-Vorrichtung (30) und mindestens eine Kommunikationsschnittstelle (24) für eine Kommunikation mit der mindestens einen externen Benutzervorrichtung (3) über mindestens ein externes Kommunikationsnetz ausgebildet ist.

6. Verfahren eines vernetzten Haushaltsvorrichtungs-, insbesondere Heizungsregelvorrichtungs, und Benutzervorrichtungs-Systems (1) zur Einbindung von mindestens einer nicht-vernetzten elektrischen Vorrichtung (40) mit einem Signal-Aktor (43) zur unidirektionalen Kommunikation mit folgenden Schritten:
- Überwachen eines unidirektionalen Kommunikationssignals (47), das von dem Signal-Aktor (43) von der nicht-vernetzten elektrischen Vorrichtung (40) bei Erreichen eines definierten Schwellwerts erzeugt wird, mittels einer Umsetzungsvorrichtung (50),
- Auswerten der Daten von unidirektionalen Kommunikationssignalen durch Prüfen auf ein definiertes Datenereignis mittels der Umsetzungsvorrichtung (50),
- Erzeugung einer Daten-Information von einer Client-Vorrichtung (30) mittels einer Client-Steuerung (31) zur Übermittlung dieser über bidirektionale Kommunikationsschnittstellen (23, 32)) bei dem definierten Datenereignis und
- Übermittlung der Daten-Information von der Clientsteuerung (31) bidirektional an mindestens eine externe Benutzervorrichtung (3).

7. Verfahren nach dem vorhergehenden Anspruch, wobei ein Alarmsignal von einem Lautsprecher als Signal-Aktor (43) von einem, als nicht-vernetzte elektrische Vorrichtung (40) ausgebildeten, Rauchmelder (46) mittels eines Mikrofons, das als Umsetzer-Sensor (51) von der Umsetzungsvorrichtung (50) in der Client-Vorrichtung (30) ausgebildet ist, und einem Steuermodul (52), das in der Client-Steuerung (31) als weiteres Teil der Umsetzungsvorrichtung (50) ausgebildet ist, überwacht wird.

8. Verfahren nach einem der vorhergehenden Ansprüche, wobei die Umsetzungsvorrichtung (50) in einer Heizungsregelvorrichtung (37) als vernetzte Client-Vorrichtung (30) ausgebildet ist und von der Client-Steuerung (31) als Steuermodul (52) die erfassten unidirektionalen Kommunikationssignale ausgewertet werden und eine zentrale Rechnersteuerung (21) einer zentralen Rechnereinheit per Kommunikationsdatenprotokoll von der Client-Steuerung (31) angesteuert wird.

9. Verfahren nach einem der vorhergehenden Ansprüche, wobei die von der Client-Steuerung (31) an die zentrale Rechnersteuerung (21) übermittelten Daten, über mindestens ein definiertes externes Kommunikationsnetz, insbesondere über ein Mobilfunknetz (6) und/oder ein mittels Kabelleitung oder drahtlos installiertes Netz (2) und/oder eines Internet-basierten Netzes, an die externe Benutzervorrichtung (3) übermittelt werden.

10. Computerprogrammprodukt zum Betreiben eines Haushaltsvorrichtungs-, insbesondere Heizungsregelvorrichtungs und Benutzervorrichtungs-Systems (1) zur Einbindung von mindestens einer nicht-vernetzten elektrischen Vorrichtung (40) mit einem Signal-Aktor (43) zur unidirektionalen Kommunikation, wobei das Computerprogrammprodukt mindestens ein computerlesbares Speichermedium mit jeweils einem darin enthaltenen Programmcode umfasst, wobei jeder Programmcode durch einen Prozessor ausführbar ist, um ein Verfahren durchzuführen, mit folgenden Schritten:
- Überwachen eines unidirektionalen Kommunikationssignals (47), das von dem Signal-Aktor (43) von der nicht-vernetzten elektrischen Vorrichtung (40) bei Erreichen eines definierten Schwellwerts erzeugt wird, mittels einer Umsetzungsvorrichtung (50),
- Auswerten der Daten durch Prüfen auf ein definiertes Datenereignis mittels der Umsetzungsvorrichtung (50),
- Erzeugung einer Daten-Information von einer Client-Vorrichtung (30) mittels einer Client-Steuerung (31) zur Übermittlung dieser über bidirektionale Kommunikationsschnittstellen (23, 32)) bei dem definierten Datenereignis und
- Übermittlung der Daten-Information von der Client-Steuerung (31) bidirektional an mindestens eine externe Benutzervorrichtung (3).
